# EUROPÄISCHE PATENTSCHRIFT

(11) **EP 3 250 030 B1**
(45) Veröffentlichungstag und Bekanntmachung des Hinweises auf die Patenterteilung: **28.04.2021**
(21) Anmeldenummer: 16701597.3
(22) Anmeldetag: 25.01.2016
(51) Int. Cl.: A01M 7/00, A01C 23/00

(54) **LANDWIRTSCHAFTLICHE MASCHINE**
AGRICULTURAL MACHINE
MACHINE AGRICOLE

(30) Priorität: 26.01.2015 DE 102015101032
(43) Veröffentlichungstag der Anmeldung: 06.12.2017
(73) Patentinhaber: Amazonen-Werk H. Dreyer SE & Co. KG, 49205 Hasbergen (DE); HYDAC Systems & Services GmbH, 66280 Sulzbach (DE)
(72) Erfinder: OBERHEIDE, Friedrich, 49143 Bissendorf (DE); GROSSE PRUES, Frank, 49434 Neuenkirchen-Vörden (DE); KIEFER, Timo, 66740 Saarlouis (DE); KOHL, Peter, 49434 Blieskastel (DE); HUTH, Heinz-Peter, 66802 Überherrn (DE); KOMMA, Georg, 66386 Sankt Ingbert (DE); PIECHNICK, Martin, 97816 Lohr (DE)
(74) Vertreter: Grünecker Patent- und Rechtsanwälte PartG mbB
(86) Internationale Anmeldenummer: PCT/EP2016/051400
(87) Internationale Veröffentlichungsnummer: WO 2016/120181

(56) Entgegenhaltungen:
- DE-A1-102007 025 751
- FR-A1- 2 529 477
- FR-A1- 2 795 913
- GB-A- 2 025 665

## Beschreibung

Die Erfindung betrifft eine landwirtschaftliche Maschine zum Ausbringen von Flüssigkeit mit den Merkmalen des Oberbegriffs des Anspruchs 1. Eine derartige Maschine ist beispielsweise aus EP 1 444 894 A1 bekannt.

Die landwirtschaftlichen Maschinen, auch Feldspritzen genannt, kommen beispielsweise zum Ausbringen von Flüssigdüngemittel oder Pestiziden zum Einsatz. Um die Flüssigkeiten über eine möglichst große Arbeitsbreite auf dem Feld auszubringen, weisen Feldspritzen einen Ausleger auf, der über 20 m breit sein kann. Am Ausleger sind Sprühdüsen befestigt, die die Flüssigkeit auf den Boden sprühen. Für eine optimale Ausbringung der Flüssigkeit soll der Abstand zwischen dem Ausleger und dem Boden über die gesamte Auslegerbreite möglichst konstant bleiben. Dies ist problematisch, wenn die Feldspritze in unterschiedlich tiefen Spurrillen oder einseitig in einer Furche fährt. Die Parallelität zwischen Boden und Ausleger soll auch bei geneigten Böden einstellbar sein.

Die Neigungsverstellung des Auslegers erfolgt durch Hydraulikzylinder und Feder-Dämpfersystemen, die mit dem Ausleger verbunden sind. Beispielhaft wird auf GB 2 025 665 A, DE 10 2007 025 751 A1, FR 2 795 913 A1, EP 1 167 095 A1 und

EP 0 922 385 A1 verwiesen. Als Messgrößen gehen bei den bekannten Regelungen der Abstand zwischen dem Ausleger und dem Boden und/oder der Relativwinkel zwischen dem Ausleger und dem Schlepper ein. Die bekannten Regelungen haben den Nachteil, dass diese ungenau sind und eine Echtzeitregelung nicht erlauben.

Deshalb weist die Feldspritze gemäß EP 1 444 894 A1 eine mehrgliedrige Aufhängung auf, bei der sowohl die Signale aus der Abstandsmessung zwischen Ausleger und Boden als auch Neigungssignale, die die Relativneigung zwischen dem Fahrzeug und dem Ausleger wiedergeben, in die Regelung eingehen. Der Ausleger ist an einem höhenverstellbaren Hubrahmen um eine in Fahrtrichtung weisende Drehachse drehbar gelagert. Ein drehbarer Zwischenrahmen ist koaxial zum Ausleger am Hubrahmen angebracht. Der Zwischenrahmen und der Ausleger sind durch zwei Zentrierfedern und einen Dämpfer miteinander gekoppelt. Zwischen dem Zwischenrahmen und dem Hubrahmen ist ein Hydraulikzylinder vorgesehen.

Zur Neigungsverstellung wird der Hydraulikzylinder ein- oder ausgefahren und verdreht den Zwischenrahmen gegenüber dem Hubrahmen. Dadurch wird eine der beiden Zentrierfedern gelängt und die andere verkürzt. Die auf den Ausleger wirkende Federkraft zieht den Ausleger entsprechend der Bewegung des Zwischenrahmens nach, so dass dieser - bezogen auf den Zwischenrahmen - in der geneigten Endposition wieder zentriert ist. Die Zentrierfedern kompensieren überdies schnelle Relativbewegungen zwischen Fahrzeug und Ausleger, so dass der Ausleger im Betrieb lagestabil bleibt.

In die Neigungsregelung gehen einerseits die Signale aus der Bodenabstandsmessung zwischen dem Ausleger und dem Boden und andererseits ein Neigungssignal ein, das ein Maß für die auf den Ausleger wirkende Federkraft bildet. Damit kann der Hydraulikzylinder präzise angesteuert werden. Ein Übersteuern des Auslegers wird weitgehend vermieden.

Allerdings ist diese Neigungsregelung langsam. Außerdem ist der Aufbau mit dem Zwischenrahmen und den zwischen den Zwischenrahmen und den Ausleger geschalteten Federn aufwändig.

Der Erfindung liegt die Aufgabe zu Grunde, eine landwirtschaftliche Maschine der eingangs genannten Art dahingehend zu verbessern, dass die Neigungsregelung des Auslegers schnell und präzise erfolgt. Der Erfindung liegt ferner die Aufgabe zu Grunde, ein Regelungsverfahren für eine landwirtschaftliche Maschine anzugeben. Erfindungsgemäß wird diese Aufgabe durch die landwirtschaftliche Maschine mit den Merkmalen des Anspruchs 1 gelöst.

Die Erfindung beruht auf dem Gedanken, eine landwirtschaftliche Maschine zum Ausbringen von Flüssigkeit mit einem Ausleger und einem Rahmen, an dem der Ausleger um eine in Fahrtrichtung weisende Drehachse drehbar befestigt ist, anzugeben. Die Maschine umfasst einen Stellzylinder zur Drehung des Auslegers um die Drehachse und ein Mess- und Regelungssystem für die Betätigung des Stellzylinders. Der Stellzylinder ist einerseits mit dem Rahmen mechanisch verbunden. Andererseits ist der Stellzylinder mit dem Ausleger mechanisch zur direkten Krafteinleitung verbunden. Der Stellzylinder ist als doppeltwirkender Stellzylinder mit einem Kolben ausgebildet, der beidseitig mit Druck zur Bewegung des Auslegers in entgegengesetzten Drehrichtungen beaufschlagbar ist.

Im Unterschied zum Stand der Technik wird bei der Erfindung auf den Zwischenrahmen verzichtet. Dazu ist der Stellzylinder einerseits am Rahmen, an dem der Ausleger befestigt ist, und andererseits mit dem Ausleger selbst mechanisch zur direkten Krafteinleitung verbunden. Bei dem Rahmen handelt es sich um einen Tragrahmen, an dem der Ausleger aufgehängt ist. Dieser Tragrahmen kann beispielsweise ein höhenverstellbarer Hubrahmen sein.

Durch die Erfindung sind die im Stand der Technik bekannten Zentrierfedern nicht erforderlich und entfallen. Die Krafteinleitung durch den Stellzylinder in den Ausleger erfolgt unmittelbar, also ohne Zwischenschaltung von Federn und/oder Dämpfern, insbesondere ohne Zwischenschaltung von mechanischen Federn und/oder Dämpfern. Die im Stand der Technik auftretende zeitliche Verzögerung durch die Verformung der Federn entfällt, so dass die Neigungsregelung entsprechend schneller anspricht.

Zur Bewegung des Auslegers in entgegengesetzte Drehrichtungen ist der Stellzylinder als doppeltwirkender Stellzylinder mit einem Kolben ausgebildet, der beidseitig mit Druck beaufschlagbar ist. Es hat sich gezeigt, dass mit Hilfe eines direkt mit dem Ausleger und dem Rahmen verbundenen Stellzylinders eine sichere und präzise Neigungsverstellung möglich wird, ohne dass es hierfür der im Stand der Technik bekannten Zentrierfedern bedarf. Die Dämpfung von Schwingungen des Auslegers erfolgt aktiv durch den Stellzylinder. Durch den Wegfall der vorstehend genannten Bauteile vereinfacht sich der Aufbau der Maschine.

Weitere Ausführungen der Erfindung sind in den Unteransprüchen angegeben. So kann der Kolben wenigstens eine Kolbenstange aufweisen, wobei die Kolbenstange am Rahmen und ein Gehäuse des Stellzylinders am Ausleger oder umgekehrt befestigt ist. Dieser Aufbau ist konstruktiv einfach, da das Zylindergehäuse und die Kolbenstange direkt am Ausleger bzw. Rahmen befestigt sind.

Der Stellzylinder kann ein Gleichlaufzylinder sein. Dadurch wird die Regelung vereinfacht, da die Hydraulik, mit der die beiden Druckseiten des Stellzylinders verbunden sind, symmetrisch ausgelegt werden kann. Alternativ kann der Stellzylinder ein Differentialzylinder sein.

Erfindungsgemäss ist der Stellzylinder mit einem Hydraulikkreislauf, insbesondere einem offenen Hydraulikkreislauf verbunden, der wenigstens eine Hydraulikpumpe und wenigstens ein Schaltorgan aufweist, wobei eine erste Leitung mit einer ersten Druckseite und eine zweite Leitung mit einer zweiten Druckseite des Stellzylinders verbunden sind. Für die Betätigung des Stellzylinders genügt ein einfacher Hydraulikkreislauf, bei dem die Hydraulikpumpe Druck bereitstellt, der mit Hilfe des Schaltorgans auf die jeweilige Druckseite des Stellzylinders geschaltet wird. Der Pumpendruck und die im offenen Hydraulikkreislauf befindlichen Fluidvolumina sind nicht konstant. Eine Ermittlung der Gestängeposition ist deshalb nicht möglich und auch nicht erforderlich.

Das Schaltorgan kann eine Schaltfrequenz von mindestens 15 Hz, insbesondere von mindestens 20 Hz, insbesondere von mindestens 25 Hz insbesondere von mindestens 30 Hz aufweisen.

Der Hydraulikkreislauf kann wenigstens einen Druckspeicher, insbesondere zwei Druckspeicher aufweisen, wobei der Druckspeicher bzw. die beiden Druckspeicher hydraulisch zwischen dem Stellzylinder und dem Schaltorgan angeordnet sind. Der Druckspeicher bzw. die beiden Druckspeicher dienen dazu, Druckspitzen abzufangen.

Die beiden Druckspeicher können direkt mit dem Stellzylinder, insbesondere direkt mit jeweils einer Druckseite des Stellzylinders verbunden sein. Alternativ können die beiden Druckspeicher jeweils im Verlauf der ersten und zweiten Leitung angeordnet und mit diesen verbunden sein. Nach einer weiteren Alternative kann der Hydraulikkreislauf auch druckspeicherlos ausgebildet sein.

Das Schaltorgan kann ein Wegeventil, insbesondere ein 3-Wegeventil, sein, das alternativ die erste oder zweite Druckseite des Stellzylinders mit der Hydraulikpumpe und die jeweils andere Druckseite mit einem Reservoir verbindet. Diese Ausführung, mit der ein offener Hydraulikkreislauf realisierbar ist, ist besonders einfach aufgebaut.

Erfindungsgemäss umfasst das Schaltorgan zwei Druckregelventile, die einerseits jeweils mit der Druckseite des Stellzylinders und andererseits jeweils alternativ mit der Hydraulikpumpe und einem Reservoir verbindbar sind.

Ein Regelungsverfahren umfasst ein Verfahren zum Regeln der Drehung eines Auslegers einer landwirtschaftlichen Maschine zum Ausbringen von Flüssigkeit mit einem Ausleger, einem Rahmen, an dem der Ausleger um eine in Fahrtrichtung weisende Drehachse drehbar befestigt ist, einem Stellzylinder zur Drehung des Auslegers um die Drehachse und einem Mess- und Regelsystem für die Betätigung des Stellzylinders, wobei das Mess-und Regelsystem den Stellzylinder mit einer Frequenz von wenigstens 15 Hz, insbesondere wenigstens 20 Hz, insbesondere wenigstens 25 Hz, insbesondere wenigstens 30 Hz betätigt.

Die Erfindung wird mit weiteren Einzelheiten unter Bezug auf die beigefügten schematischen Zeichnungen näher erläutert. In diesen zeigen
Fig. 1 eine Draufsicht auf eine nicht erfindungsgemässe Aufhängung des Auslegers am Rahmen mit einem schematisch dargestellten Mess- und Regelsystem, bei dem zwei Druckspeicher direkt am Zylindergehäuse vorgesehen sind;
Fig. 2 die Aufhängung gemäß Fig. 1, wobei nicht erfindungsgemäss die Druckspeicher im Verlauf der Hydraulikleitungen angeordnet sind;
Fig. 3 die Aufhängung gemäß Fig. 1, wobei nicht erfindungsgemäss der Hydraulikkreislauf druckspeicherlos ausgebildet ist;
Fig. 4 die Aufhängung gemäß Fig. 1, wobei erfindungsgemäss anstelle des 3-Wegeventils zwei Druckregelventile vorgesehen sind;
Fig. 5 den erfindungsgemässen Ausleger gemäß Fig. 4 mit den Druckventilen, wobei die Druckspeicher im Verlauf der Hydraulikleitungen angeordnet sind;
Fig. 6 die erfindungsgemässe Aufhängung gemäß Fig. 4, wobei der Hydraulikkreislauf druckspeicherlos ausgebildet ist;
Fig. 7 die nicht erfindungsgemässe Aufhängung gemäß Fig. 1, wobei anstelle des Gleichlaufzylinders ein Differentialzylinder vorgesehen ist.

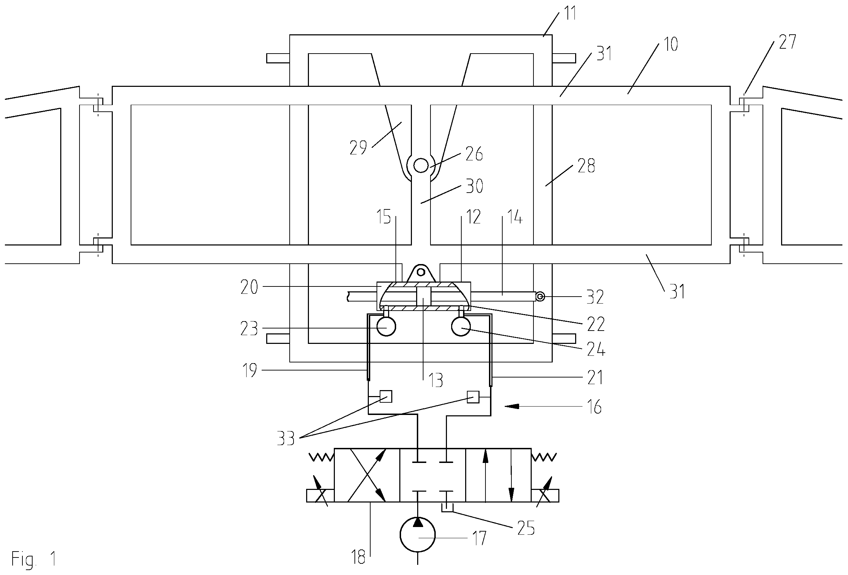

Der in Fig. 1 dargestellte schematische Ausschnitt zeigt einen Ausleger 10, der Teil einer landwirtschaftlichen Maschine, insbesondere einer Feldspritze, ist.

Derartige Feldspritzen können beispielsweise als Anhängefeldspritze oder als selbstfahrende Feldspritze ausgeführt sein. Die Feldspritze weist ein Fahrwerk auf, auf dem ein Tank mit einer entsprechenden Pumpe montiert ist (nicht dargestellt). Der Tank versorgt die am Ausleger unten angebrachten Düsen mit Flüssigkeit, die im Betrieb auf den Boden bzw. Pflanzen aufgesprüht wird. Der Ausleger selbst ist für den Straßenbetrieb klappbar ausgeführt. Derartige Feldspritzen sind an sich bekannt und werden nicht näher beschrieben.

Der in Fig. 1 dargestellte Rahmen ist drehfest mit dem Fahrwerk der Feldspritze verbunden. Der Rahmen 11 kann als höhenverstellbarer Hubrahmen ausgebildet sein. Der Rahmen 11 bildet ein Traggestell mit mehreren Streben 28. Die Streben 28 sind in Fig. 1 in Form eines Rechtecks miteinander verbunden und bieten eine stabile Aufhängung für den Ausleger 10. An der im Betrieb oberen Vertikalstrebe 28 ist ein nach unten vorstehender Vorsprung 29 vorgesehen, in dessen unterem Bereich ein Drehgelenk 26 vorgesehen ist. An dem Drehgelenk 26 ist der Ausleger 10 um eine in Fahrtrichtung weisende Drehachse drehbar gelagert. Andere Lagerungsmöglichkeiten für das Drehgelenk 26, beispielsweise eine Strebenanordnung, sind ebenso möglich, wie andere Rahmengeometrien.

Der Ausleger 10 ist in an sich bekannter Weise als stabiles Gestänge ausgebildet und weist mehrere Drehgelenke 27 zum Einklappen des Gestänges auf. In Fig. 1 sind nur der mittlere Teil sowie zwei angrenzende Gestänge-Segmente des Auslegers 10 dargestellt. Der Ausleger 10 weist eine Vertikalstrebe 30 auf, die zwei Horizontalstreben des Auslegers im Bereich des Rahmens 11 mittig verbindet. Das Drehgelenk 26 ist an der Vertikalstrebe 30 außermittig, konkret etwas oberhalb der Strebenmitte angeordnet.

Zur Einstellung der Neigung des Auslegers 10 ist ein Stellzylinder 12 sowie ein Mess- und Regelungssystem zur Betätigung des Stellzylinders 12 vorgesehen.

Der Stellzylinder 12 ist einerseits mit dem Rahmen 11 und andererseits mit dem Ausleger 10 mechanisch verbunden. Wie in Fig. 1 zu sehen, ist bei dem Ausführungsbeispiel der Stellzylinder 12 einerseits direkt mit dem Rahmen 11 und andererseits direkt mit dem Ausleger 10 mechanisch verbunden.

Unter einer direkten mechanischen Verbindung wird eine Verbindung verstanden, bei der eine direkte Krafteinleitung in den Ausleger 10 durch den Stellzylinder 12 möglich ist. Im Unterschied dazu erfolgt bei dem aus EP 1 444 894 A1 bekannten Stellsystem die Krafteinleitung indirekt, weil im Kraftfluss vom Stellzylinder auf den Ausleger die Zentrierfedern zwischengeschaltet sind. Dies ist bei dem Beispiel gemäß Fig. 1 nicht der Fall, bei dem die Kräfte unmittelbar in den Ausleger 10 eingeleitet werden.

Konkret ist der Stellzylinder 12 bei dem Beispiel gemäß Fig. 1 als doppeltwirkender Stellzylinder ausgebildet, der einen Kolben 13 in einem Gehäuse 15 des Stellzylinders 12 aufweist, der beidseitig mit Druck beaufschlagbar ist. Bei dem Stellzylinder 12 handelt es sich um einen Gleichlaufzylinder, bei dem die Hubvolumina auf beiden Seiten des Kolbens 13 im Wesentlichen gleich groß sind. Dazu sind auf beiden Seiten des Kolbens 13 Kolbenstangen 14 mit gleichen Durchmessern vorgesehen.

Eine der beiden Kolbenstangen 14 ist mit dem Rahmen 11 mechanisch verbunden. Die Verbindung ist gelenkig ausgebildet, um eine Drehung des Stellzylinders 12 um den Anlenkpunkt 32 zu ermöglichen. Mit anderen Worten dreht der Stellzylinder 12 bei Betätigung um eine durch den Anlenkpunkt 32 verlaufende, in Fahrtrichtung weisende Drehachse. Die andere Kolbenstange 14 endet frei.

Bei dem Beispiel gemäß Fig. 1 ist das Gehäuse 15 des Stellzylinders 12 direkt mit dem Ausleger 10, konkret mit der unteren der beiden Horizontalstreben 31 mechanisch verbunden. Auch hier handelt es sich um eine gelenkige Verbindung, die eine Drehung des Stellzylinders 12 um eine in Fahrtrichtung weisende Drehachse ermöglicht. Dadurch kann der Stellzylinder 12 seine in Fig. 1 dargestellte parallele Ausgangsposition bezogen auf den Ausleger 10 während der Neigungsverstellung verändern.

Die in Fig. 1 dargestellte Verbindung zwischen dem Stellzylinder 12 und dem Rahmen 11 bzw. dem Ausleger 10 kann variiert werden. Beispielsweise kann die Kolbenstange 14 am Ausleger 10 und das Gehäuse 15 des Stellzylinders 12 am Rahmen 11 mechanisch befestigt sein (kinematische Umkehr).

Bei dem Beispiel gemäß Fig. 1 ist die Kolbenstange 14 direkt an der Vertikalstrebe 28 des Rahmens 11 befestigt. Es ist auch möglich, zwischen die Kolbenstange 14 und die Vertikalstrebe 28 ein starres Zwischenstück einzusetzen, um den Abstand zwischen dem Stellzylinder 12 und dem Rahmen 11 zu verkürzen, wenn dies erforderlich ist. Auch in diesem Fall erfolgt die Krafteinleitung bzw. die Kraftübertragung vom Rahmen 11 auf den Ausleger 10 durch den Stellzylinder 12 direkt bzw. federlos. Dasselbe gilt für etwaige starre Zwischenstücke zwischen dem Ausleger 10 und dem Gehäuse 15 des Stellzylinders 12.

Wie in Fig. 1 weiter gezeigt, ist der Stellzylinder 12 mit einem Hydraulikkreislauf 16 verbunden. Bei dem Hydraulikkreislauf 16 handelt es sich um einen offenen Kreislauf, der ein Hydraulikreservoir 25 und eine Pumpe 17 umfasst. Zwischen der Pumpe 17 und dem Hydraulikreservoir 25 einerseits und dem Stellzylinder 12 andererseits ist ein Schaltorgan 18 angeordnet. Das Schaltorgan 18 verbindet die Pumpe 17 bzw. das Hydraulikreservoir 25 mit den beiden Druckseiten 20, 22 des Stellzylinders 12. Dazu sind entsprechende erste und zweite Leitungen 19, 21 zwischen dem Stellzylinder 12 und dem Schaltorgan 18 vorgesehen.

Bei dem Schaltorgan handelt es sich um ein Proportional-Wegeventil, das in einer ersten Schaltstellung die erste Druckseite 20 mit der Pumpe 17 und die zweite Druckseite 22 mit dem Reservoir 25 verbindet. In der zweiten Schaltstellung verbindet das Schaltorgan 18 die zweite Druckseite 22 mit der Pumpe 17 und die erste Druckseite 20 mit dem Reservoir 25. In der in Fig. 1 dargestellten Nullstellung sind die Pumpe 17 und das Reservoir 25 vom Stellzylinder 12 hydraulisch getrennt.

Das Schaltorgan 18, konkret das Ventil, ist mit einer Frequenz von mindestens 15 Hz, insbesondere von mindestens 20 Hz, insbesondere von mindestens 25 Hz, insbesondere von mindestens 30 Hz betätigbar.

Wie in Fig. 1 weiter zu erkennen, weist das Gehäuse 15 zwei Druckspeicher 23, 24 auf, die direkt an das Gehäuse im Bereich der ersten und zweiten Druckseite 20, 22 angeflanscht sind. Die beiden Druckspeicher 23, 24 dienen dazu, Druckspitzen abzufangen.

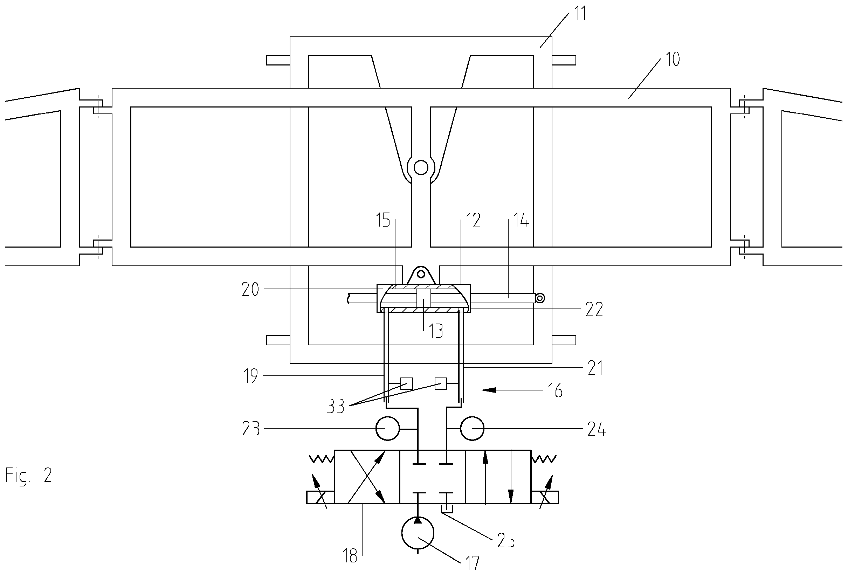

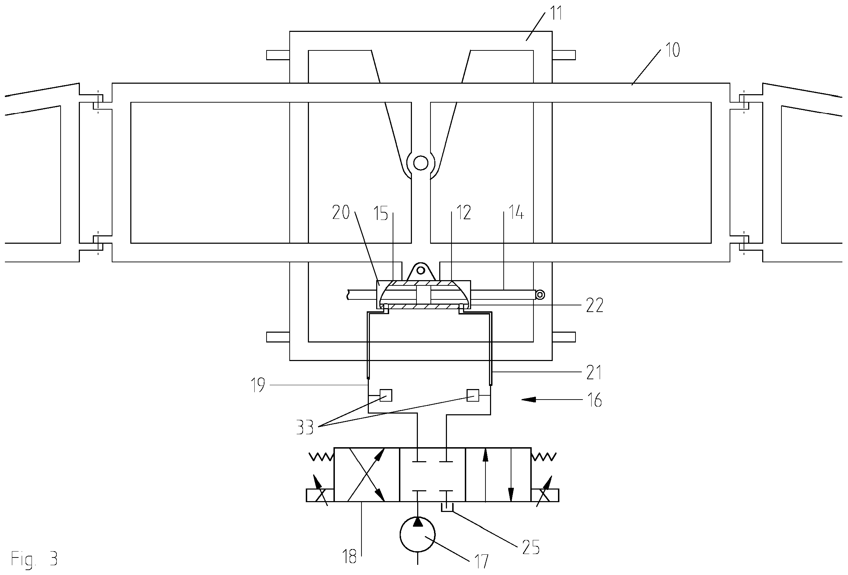

Wie in Fig. 2 dargestellt, können die Druckspeicher 23, 24 auch im Verlauf der beiden Leitungen 19, 21 angeordnet sein. Es ist auch möglich, wie in Fig. 3 dargestellt, auf die beiden Druckspeicher komplett zu verzichten. Der Hydraulikkreislauf ist dann druckspeicherlos ausgebildet. Im Übrigen entsprechen die Beispiele gemäß Fig. 2, 3 dem Beispiel gemäß Fig. 1. Das Mess- und Regelungssystem weist ferner Sensoren auf. So sind an der Unterseite des Auslegers auf beiden Seiten des Drehgelenks 26 Abstandssensoren, beispielsweise Ultraschallsensoren vorgesehen (nicht dargestellt). Konkret sind die Ultraschallsensoren an den Spitzen bzw. Längsenden des Auslegers angeordnet. Eine andere Anordnung ist möglich. Mit den Abstandssensoren werden Höhendifferenzen zwischen den Auslegerspitzen bezogen auf den Boden und/oder den Pflanzenbestand gemessen.

Zusätzlich weist das Mess- und Regelsystem zwei Drucksensoren 33 auf, die den Druck in den beiden Leitungen 19, 21 messen und entsprechende Signale ausgeben, die zusammen mit den Signalen der Abstandssensoren zur Regelung des Schaltorgans 18 verarbeitet werden. Konkret sind die beiden Drucksensoren 33 zwischen den Druckspeichern 23, 24 und dem Schaltorgan 18 angeordnet. Eine andere Anordnung der Drucksensoren, beispielsweise im Rahmen des Beispiels gemäß Fig. 2 ist möglich. Bei der erfindungsgemässen Verwendung von Druckregelventilen als Schaltorgane 18 erfolgt die Steuerung des Drucks mittels der Kennlinien der betreffenden Ventile. Die Drucksensoren sind dann nicht zwingend erforderlich, können aber zur Verbesserung der Präzision der Regelung eingesetzt werden.

Die Signale der Drucksensoren ermöglichen eine aktive Schwingungsdämpfung im Rahmen der Regelung. Aufgrund des variablen Ölvolumens im Hydraulikkreislauf ist allerdings keine Gestängeposition aufgrund des Öldrucks bestimmbar, was für die Regelung auch nicht erforderlich ist. Weitere Sensoren zur Messung von Parametern, die in die Regelung eingehen, bspw. ein Drehratensensor zur Messung der Drehrate des Auslegers, können vorgesehen sein.

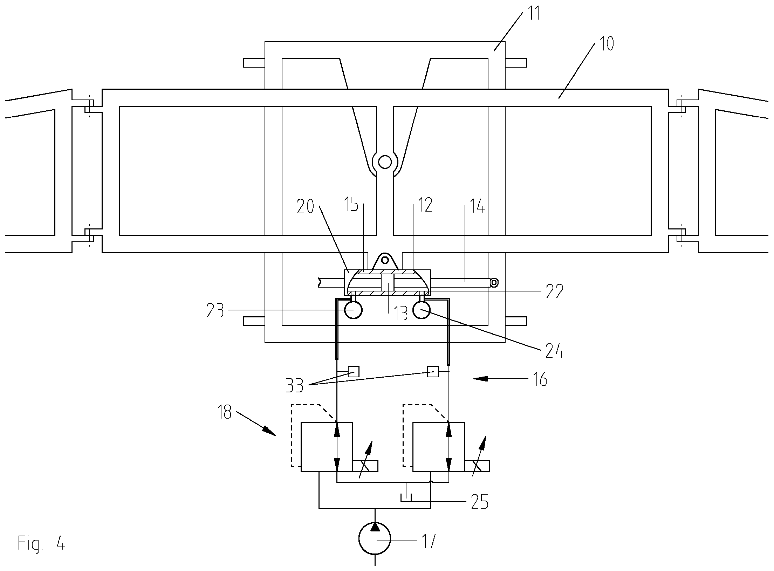

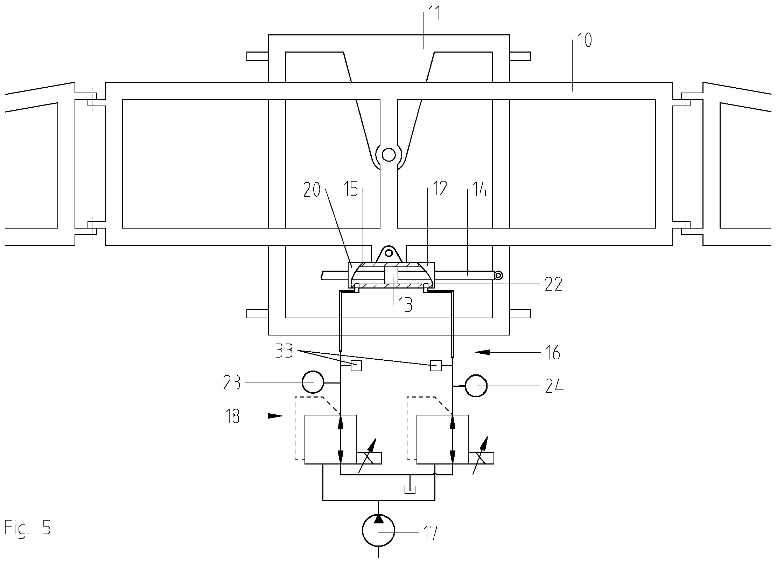

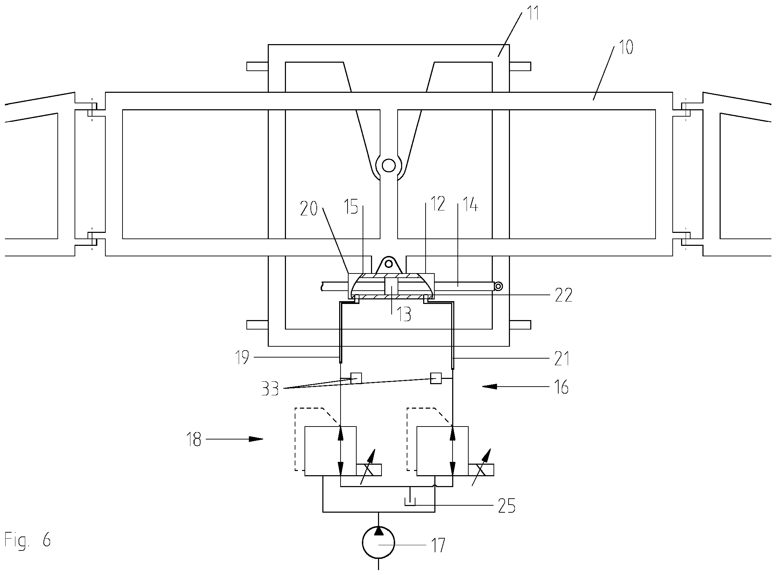

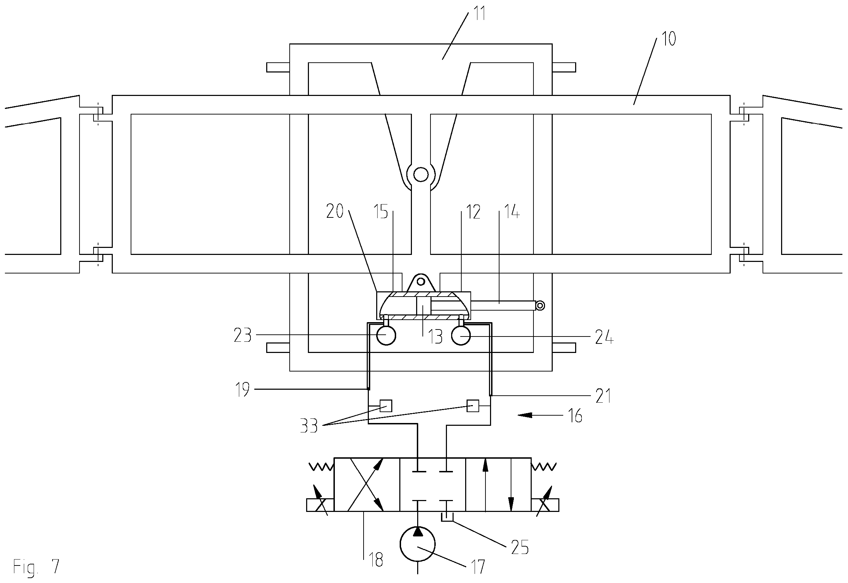

Die erfindungsgemässen Ausführungsbeispiele gemäß Fig. 4, 5 und 6 entsprechen den Beispielen gemäß Fig. 1 bis 3 bis auf das Schaltorgan 18, das bei den erfindungsgemässen Ausführungsbeispielen gemäß Fig. 4 bis 6 ein Druckregelventil ist. Konkret sind zwei Druckregelventile, insbesondere proportionale Druckregelventile vorgesehen, die alternierend die erste Druckseite 20 bzw. die zweite Druckseite 22 des Stellzylinders 12 mit der Pumpe 17 bzw. dem Reservoir 25 verbinden. Die Sensoren und das Mess- und Regelsystem können, wie im Zusammenhang mit dem Beispiel gemäß Fig. 1 beschrieben, ausgeführt sein. Der Unterschied zwischen dem Beispiel gemäß Fig. 7 und dem Beispiel gemäß Fig. 1 besteht darin, dass anstelle des Gleichlaufzylinders gemäß Fig. 1 ein Differentialzylinder vorgesehen ist.

### Bezugszeichenliste

- 10: Ausleger
- 11: Rahmen
- 12: Stellzylinder
- 13: Kolben
- 14: Kolbenstangen
- 15: Gehäuse
- 16: Hydraulikkreislauf
- 17: Pumpe
- 18: Schaltorgan
- 19: erste Leitung
- 20: erste Druckseite
- 21: zweite Leitung
- 22: zweite Druckseite
- 23, 24: Druckspeicher
- 25: Hydraulikreservoir
- 26: Drehgelenk
- 27: Drehgelenke
- 28: Vertikalstrebe
- 29: Vorsprung
- 30: Vertikalstrebe
- 31: Horizontalstreben
- 32: Anlenkpunkt
- 33: Drucksensoren

## Patentansprüche

1. Landwirtschaftliche Maschine zum Ausbringen von Flüssigkeit mit
einem Ausleger (10),
einem Rahmen (11), an dem der Ausleger (10) um eine in Fahrtrichtung weisende Drehachse drehbar befestigt ist,
einem Stellzylinder (12) zur Drehung des Auslegers (10) um die Drehachse, und
einem Mess- und Regelsystem für die Betätigung des Stellzylinders (12),
wobei der Stellzylinder (12) einerseits mit dem Rahmen (11) mechanisch verbunden ist,
und der Stellzylinder (12) andererseits mit dem Ausleger (10) mechanisch zur direkten Krafteinleitung verbunden ist, wobei der Stellzylinder (12) als doppeltwirkender Stellzylinder (12) mit einem Kolben (13) ausgebildet ist, der beidseitig mit Druck zur Bewegung des Auslegers (10) in entgegengesetzten Drehrichtungen beaufschlagbar ist;
wobei der Stellzylinder (12) mit einem Hydraulikkreislauf (16), insbesondere einem offenen Hydraulikkreislauf (16), verbunden ist, der eine Hydraulikpumpe (17) und wenigstens ein Schaltorgan (18) aufweist, und wobei eine erste Leitung (19) mit einer ersten Druckseite (20) und eine zweite Leitung (21) mit einer zweiten Druckseite (22) des Stellzylinders (12) verbunden ist,
**dadurch gekennzeichnet, dass**
das Schaltorgan (18) zwei Druckregelventile umfasst, die einerseits jeweils mit einer Druckseite (22, 22) des Stellzylinders (12) und andererseits jeweils alternativ mit der Hydraulikpumpe (17) und einem Reservoir (25) verbindbar sind.

2. Maschine nach Anspruch 1, **dadurch gekennzeichnet, dass**
der Kolben (13) wenigstens eine Kolbenstange (14) aufweist, wobei die Kolbenstange (14) am Rahmen (11) und ein Gehäuse (15) des Stellzylinders (12) am Ausleger (10) oder umgekehrt befestigt ist.

3. Maschine nach Anspruch 1 oder 2, **dadurch gekennzeichnet, dass**
der Stellzylinder (12) ein Gleichlaufzylinder ist.

4. Maschine nach Anspruch 1 oder 2, **dadurch gekennzeichnet, dass**
der Stellzylinder (12) ein Differentialzylinder ist.

5. Maschine nach Anspruch 1, **dadurch gekennzeichnet, dass**
der Hydraulikkreislauf (16) wenigstens einen Druckspeicher, insbesondere zwei Druckspeicher (23, 24), aufweist, wobei der Druckspeicher bzw. die beiden Druckspeicher hydraulisch zwischen dem Stellzylinder und dem Schaltorgan angeordnet sind.

6. Maschine nach Anspruch 5, **dadurch gekennzeichnet, dass**
die beiden Druckspeicher (23, 24) direkt mit dem Stellzylinder (12), insbesondere direkt mit jeweils einer Druckseite (20, 22) des Stellzylinders (12), verbunden sind.

7. Maschine nach Anspruch 5, **dadurch gekennzeichnet, dass**
die beiden Druckspeicher (23, 24) jeweils im Verlauf der ersten und zweiten Leitung (19, 21) angeordnet und mit diesen verbunden sind.

8. Maschine nach Anspruch 1, **dadurch gekennzeichnet, dass**
der Hydraulikkreislauf (16) druckspeicherlos ausgebildet ist.

## Claims

1. An agricultural machine for discharging liquid, having
a boom (10),
a frame (11), to which the boom (10) is fixed so that it can be rotated about an axis of rotation pointing in the direction of travel,
an actuating cylinder (12) for rotating the boom (10) about the axis of rotation, and
a measurement and control system for operation of the actuating cylinder (12),
wherein the actuating cylinder (12) is mechanically connected on the one hand to the frame (11),
and the actuating cylinder (12) is mechanically connected on the other hand to the boom (10) for the direct introduction of force, wherein the actuating cylinder (12) is embodied as a double-acting actuating cylinder (12) having a piston (13), to which pressure can be applied from both sides in order to move the boom (10) in opposite directions of rotation;
wherein the actuating cylinder (12) is connected to a hydraulic circuit (16), in particular an open hydraulic circuit (16), which comprises a hydraulic pump (17) and at least one control element (18), wherein a first line (19) is connected to a first pressure side (20) and a second line (21) to a second pressure side (22) of the actuating cylinder (12),
**characterized in that**
the control element (18) comprises two pressure control valves, which can each be connected to a pressure side (22, 22) of the actuating cylinder (12) on the one hand and each alternatively connected to the hydraulic pump (17) and a reservoir (25) on the other.

2. The machine as claimed in claim 1, **characterized in that** the piston (13) comprises at least one piston rod (14), wherein the piston rod (14) is fixed to the frame (11), and a housing (15) of the actuating cylinder (12) is fixed to the boom (10) or vice-versa.

3. The machine as claimed in claim 1 or 2, **characterized in that** the actuating cylinder (12) is a synchronous cylinder.

4. The machine as claimed in claim 1 or 2, **characterized in that** the actuating cylinder (12) is a differential cylinder.

5. The machine as claimed in claim 1, **characterized in that** the hydraulic circuit (16) comprises at least one pressure accumulator, in particular two pressure accumulators (23, 24), wherein the pressure accumulator or the two pressure accumulators are arranged hydraulically between the actuating cylinder and the control element.

6. The machine as claimed in claim 5, **characterized in that** the two pressure accumulators (23, 24) are connected directly to the actuating cylinder (12), in particular each connected directly to a pressure side (20, 22) of the actuating cylinder (12).

7. The machine as claimed in claim 5, **characterized in that** the two pressure accumulators (23, 24) are each arranged in the course of the first and second line (19, 21) and are connected to these.

8. The machine as claimed in claim 1, **characterized in that** the hydraulic circuit (16) is formed without any pressure accumulator.

## Revendications

1. Machine agricole d'épandage de liquide comprenant
une rampe (10),
un châssis (11) sur lequel la rampe (10) est fixée de manière rotative autour d'un axe de rotation orienté dans le sens de la marche,
un vérin de réglage (12) pour faire tourner la rampe (10) autour de l'axe de rotation, et un système de mesure et de régulation pour l'actionnement du vérin (12),
le vérin de réglage (12) étant relié mécaniquement au châssis (11), d'une part,
et le vérin de réglage (12) étant relié mécaniquement à la rampe (10) pour une application directe d'effort, d'autre part, le vérin de réglage (12) étant conçu comme un vérin de réglage à double effet (12) avec un piston (13) auquel une pression peut être appliquée des deux côtés pour déplacer la rampe (10) dans des sens de rotation opposés ;
le vérin de réglage (12) étant relié à un circuit hydraulique (16), en particulier un circuit hydraulique ouvert (16), qui comprend une pompe hydraulique (17) et au moins un organe de commutation (18), et une première ligne (19) étant reliée à un premier côté de pression (20) et une seconde ligne (21) étant reliée à un second côté de pression (22) du vérin de réglage (12),
**caractérisée en ce que**
l'organe de commutation (18) comprend deux vannes de régulation de pression qui peuvent être reliées, chacune, d'une part à un côté de pression (22, 22) du vérin de réglage (12) et d'autre part, de façon alternative, à la pompe hydraulique (17) et à un réservoir (25).

2. Machine selon la revendication 1, **caractérisée en ce que**
le piston (13) comporte au moins une tige de piston (14), la tige de piston (14) étant fixée au châssis (11) et un carter (15) du vérin de réglage (12) étant fixé à la rampe (10) ou vice versa.

3. Machine selon la revendication 1 ou 2, **caractérisée en ce que**
le vérin de réglage (12) est un vérin homocinétique.

4. Machine selon la revendication 1 ou 2, **caractérisée en ce que**
le vérin de réglage (12) est un vérin différentiel.

5. Machine selon la revendication 1, **caractérisée en ce que**
le circuit hydraulique (16) comporte au moins un accumulateur de pression, notamment deux accumulateurs de pression (23, 24), l'accumulateur de pression ou les deux accumulateurs de pression étant agencés hydrauliquement entre le vérin et l'organe de commutation.

6. Machine selon la revendication 5, **caractérisée en ce que**
les deux accumulateurs de pression (23, 24) sont reliés directement au vérin de réglage (12), en particulier directement à un côté de pression respectif (20, 22) du vérin de réglage (12).

7. Machine selon la revendication 5, **caractérisée en ce que**
les deux accumulateurs de pression (23, 24) sont agencés chacun sur le parcours des première et seconde lignes (19, 21) et sont reliés à elles.

8. Machine selon la revendication 1, **caractérisée en ce que**
le circuit hydraulique (16) est conçu sans accumulateur de pression.
